# EUROPEAN PATENT APPLICATION

(11) **EP 3 040 923 A1**
(43) Date of publication of application: **06.07.2016**
(21) Application number: 15202129.1
(22) Date of filing: 22.12.2015
(51) Int. Cl.: G06Q 20/32, G06Q 30/02, G06Q 30/06, H04W 4/00

(54) **PAYMENT SERVICE SYSTEM USING BEACON, AND PAYMENT SERVICE DEVICE AND METHOD IN THE SYSTEM**

(30) Priority: 02.01.2015 KR 20150000062
(71) Applicant: SK Planet Co., Ltd., Seongnam-si Gyeonggi-do 463-400 (KR)
(72) Inventor: KWAK, Sebyung, 02785 Seoul (KR)
(74) Representative: Thorniley, Peter

(57) **Abstract**

The present invention relates to payment service system using beacon, and payment service method in the system, and may determine a user's position and moving route within an affiliated store using a beacon signal and provide target marketing information to a user terminal based on the determined user's position and moving route. In addition, when the user goes out of the affiliated store via the entrance and exit of the affiliated store in which a sensor is installed while carrying a product, the fact that the user goes out from the affiliated store may be confirmed using the beacon signal, the sensor may calculate the price of the product when the user passes through the entrance and exit, and the calculated price may be automatically charged to the user who has been authenticated through a POS terminal of the affiliated store.

## Description

### CROSS-REFERENCE TO RELATED APPLICATION

This application claims priority to and the benefit of Korean Patent Application No. 10-2015-0000062 filed in the Korean Intellectual Property Office on January 2, 2015, the entire contents of which are incorporated herein by reference.

### TECHNICAL FIELD

The present invention relates to a payment service system using a beacon, and a payment service device and method in the system, and more particularly, to a payment service system using a beacon, which may analyze a user's position and moving route using a beacon signal and provide target marketing information based on the analyzed result, and enable one-click payment for a product desired to be purchased so that the payment is conveniently made, and a payment service device and method in the system.

### BACKGROUND

With the development of a mobile communication network and terminal specification, a mobile communication terminal has become essential belongings of modem people beyond a conventional simple communication device or information providing device, and has a tendency to evolve into a total entertainment device.

In particular, in recent years, a lot of payment services using a smartphone are used, and for example, when a product is purchased from affiliated stores, the function of a membership card capable of offering a discount or point accumulation is available as a mobile service, and the function of a credit card is also available through a mobile application. In this instance, a user has to carry a previously issued mobile card or credit card, and is able to proceed payment by tagging the previously issued mobile card on an NFC (Near Field Communication) reader connected to a POS (Point Of Sales) terminal or directly presenting the credit card in the affiliated stores having a POS system to which an NFC tagging is connected.

In this case, the POS system may obtain card information read from the NFC reader or card information read from a card reader, and receive a payment approval from a card company via a VAN (Value Added Network).

In a case of an existing payment service in this manner, product payment is made based on a user's action, and the payment service using NFC tagging or the like is not applied to all OSs (e.g., Android OS, iOS, and the like), resulting in inconvenience.

In addition, in the case of the existing payment service, when coupon information that gives a discount for a product desired to be purchased by a user is stored in the user's mobile phone or the user carries a card giving a discount, a discount/accumulation process is performed by inputting card information or coupon information which has been read from the NFC or card reader through the POS terminal when payment is made.

That is, product payment and discount/accumulation on the corresponding product is made based on the user's action, and therefore there is inconvenience in which the user has to always carry a credit card for payment or an affiliate card or a coupon for discount/accumulation and has to present the corresponding card to a cashier when payment is made.

### SUMMARY

The present invention is directed to providing a payment service system using a beacon, which may analyze a user's position and moving route using a beacon signal positioned in a store and provide target marketing information based on the analyzed result, and enable one-click payment for a product desired to be purchased so that the payment is conveniently made, and a payment service device and method in the system.

One aspect of the present invention provides a user terminal including: a communication unit that transmits and receives data by communicating with one or more beacon devices, an affiliated store information providing device, and a payment service device; an output unit that outputs received information; and a control unit that receives a beacon signal from the beacon device, extracts beacon identification information by analyzing the beacon signal, transmits the extracted beacon identification information to the affiliated store information providing device, outputs, when receiving marketing information from the affiliated store information providing device, the received marketing information through the output unit, receives an input of information for user authentication from a user when there is a request for user authentication from the affiliated store information providing device in association with payment for a specific product, transmits the information for user authentication to the affiliated store information providing device, and then outputs, when receiving payment approval details, the received payment approval details through the output unit.

Here, the communication unit may receive the beacon signal using a BLE (Bluetooth Low Energy).

Also, the user terminal may further include a storage unit that stores user information for identifying a user of the user terminal and beacon identification information for identifying the beacon device.

Another aspect of the present invention provides an affiliated store information providing device including: an affiliated store information communication unit that transmits and receives data by communicating with one or more user terminals and a payment service device; an affiliated store information storage unit that stores affiliated store identification information for identifying a specific affiliated store; and an affiliated store information control unit that receives beacon identification information from the user terminal through the affiliated store information communication unit, analyzes a user's position and moving route of the user terminal based on the beacon identification information, transmits marketing information to the user terminal through the affiliated store information communication unit according to the analyzed result, requests information for user authentication from the user terminal when the user authentication is required in association with payment for a specific product, performs user authentication, when receiving the information for user authentication from the user terminal, using the received information for user authentication, and then requests payment for the specific product from the payment service device based on received information about the specific product when it is detected that the user's position is out of an affiliated store where the user of the corresponding user terminal goes in.

Still another aspect of the present invention provides a payment service device including: a service communication unit that transmits and receives data by communicating with one or more user terminals and an affiliated store information providing device; and a service control unit that receives affiliated store identification information and a payment request signal associated with a specific product from the affiliated store information providing device, performs product payment according to a payment means and a payment method registered in advance by a user of the corresponding user terminal in response to the payment request, and controls payment approval details to be transmitted to the user terminal.

Yet another aspect of the present invention provides a payment service system including: a user terminal that receives a beacon signal from one or more beacon devices, extracts beacon identification information by analyzing the beacon signal, transmits the extracted beacon identification information to an affiliated store information providing device, outputs, when receiving marketing information from the affiliated store information providing device, the received marketing information, receives an input of information for user authentication from a user of the corresponding user terminal when there is a request for user authentication from the affiliated store information providing device in association with payment for a specific product, transmits the information for user authentication to the affiliated store information providing device, and then outputs, when receiving payment approval details, the received payment approval details; the affiliated store information providing device that receives beacon identification information from the user terminal, analyzes a user's position and moving route of the user terminal based on the beacon identification information, transmits marketing information to the user terminal according to the analyzed result, requests information for user authentication from the user terminal when the user authentication is required in association with payment for the specific product, performs user authentication, when receiving the information for user authentication from the user terminal, using the received information for user authentication, and then requests payment for the specific product from the payment service device based on received information about the specific product when it is detected that the user's position is out of an affiliated store where the user goes in; and the payment service device that receives affiliated store identification information and a payment request signal associated with the specific product from the affiliated store information providing device, performs product payment according to a payment means and a payment method registered in advance by the user of the corresponding user terminal in response to the payment request, and transmits payment approval details to the user terminal.

Further aspect of the present invention provides a payment service method using a beacon including: receiving, by a user terminal, a beacon signal from one or more beacon devices; extracting, by the user terminal, beacon identification information from the beacon signal; transmitting, by the user terminal, the extracted beacon identification information to an affiliated store information providing device; outputting, when receiving marketing information from the affiliated store information providing device, the received marketing information; receiving an input of information for user authentication from a user when there is a request for user authentication from the affiliated store information providing device in association with payment for a specific product, and transmitting the information for user authentication to the affiliated store information providing device; and outputting, when receiving payment approval details from a payment service device, the received payment approval details.

Here, before the receiving of the beacon signal, the payment service method may further include connecting, by the user terminal, to a reception area of the beacon signal within a specific affiliated store.

Also, the beacon identification information may include at least one of UUID (Universally Unique Identification), a major indicating a group of the beacon device, and a minor for identifying the beacon device within the group of the beacon device.

Further aspect of the present invention provides a payment service method including: receiving, by an affiliated store information providing device, beacon identification information from a user terminal; analyzing a user's position and moving route of the user terminal based on the beacon identification information; transmitting marketing information to the user terminal according to the analyzed result; requesting information for user authentication from the user terminal when the user authentication is required in association with payment for a specific product; performing user authentication, when receiving the information for user authentication from the user terminal, using the received information for user authentication; and requesting payment from a payment service device based on received information about the specific product when it is detected that the user's position is out of an affiliated store where the user of the user terminal goes in.

Further aspect of the present invention provides a payment service method including: receiving, by a payment service device, affiliated store identification information and a payment request signal associated with a specific product from a affiliated store information providing device; performing product payment according to a payment means and a payment method registered in advance by a user of a corresponding user terminal in response to the payment request; and transmitting payment approval details to the user terminal.

According to an embodiment of the present invention, by determining a user's position and moving route within an affiliated store using a beacon signal and providing target marketing information such as store information or information about products displayed in the store to a user's terminal based on the determined user's position and moving route, there is an advantage in performing target marketing with respect to the user, and the user may easily check information such as detailed information and discount information about the corresponding product and this may be a lot of help when the corresponding product is purchased.

In addition, when a user is positioned within an affiliated store in a case in which the user desires to make payment for a specific product in the affiliated store, whether the user who possesses a terminal matches a subscriber of the terminal may be determined in advance. Thereafter, when the user goes out of the affiliated store via the entrance and exit of the affiliated store in which a sensor is installed while carrying the product, the fact that the user goes out from the affiliated store may be confirmed using a beacon signal, the sensor may calculate the price of the product when the user passes through the entrance and exit, and the calculated price may be automatically charged to the user who has been authenticated through a POS (Point Of Sales) terminal of the affiliated store.

Thus, the user may input product information to the POS terminal through a staff for the purpose of product payment and present additional service information such as a card, a coupon, or a gift certificate, and therefore payment may be automatically made without the need to make payment based on an action of the user who makes payment. As a result, the payment time may be shortened so that it is possible to conveniently use the affiliated store.

In addition, it is unnecessary for the user to always have to carry payment additional service information such as an affiliate service card, a coupon, or a gift certificate in order to apply the additional service information when payment is made, and it is possible to remove the inconvenience having to directly present an affiliate card, a coupon, or a gift certificate in order to receive discount/accumulation for the corresponding product when payment is made.

### BRIEF DESCRIPTION OF DRAWINGS

FIG. 1 is a view showing the configuration of a payment service system according to an embodiment of the present invention.
FIG. 2 is a view showing the configuration of a user terminal in a payment service system according to an embodiment of the present invention.
FIG. 3 is a view showing the configuration of an affiliated store information providing device in a payment service system according to an embodiment of the present invention.
FIG. 4 is a view showing the configuration of a payment service device in a payment service system according to an embodiment of the present invention.
FIGS. 5A and 5B are views showing payment service providing procedures in a payment service system according to an embodiment of the present invention.
FIG. 6 is a view showing a payment service method in a user terminal according to an embodiment of the present invention.
FIG. 7 is a view showing a payment service method in an affiliated store information providing device according to an embodiment of the present invention.

### DETAILED DESCRIPTION

Hereinafter, embodiments of the present invention will be described in detail with reference to the accompanying drawings. However, in the description and the accompanying drawings, well-known functions or constructions which may obscure the subject matter of the present invention will be omitted. In addition, the same components throughout the drawings are to be noted that as indicated by the same reference numerals.

It should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention, so it should be understood that other equivalents and modifications could be made thereto without departing from the spirit and scope of the invention.

Hereinafter, preferred embodiments according to the present invention will be described in detail with reference to the accompanying drawings. Detailed description, which will be given below with reference to the accompanying drawings, is to illustrate exemplary embodiments of the present invention, rather than to show the only embodiments in which the invention may be practiced. Detailed description includes specific details in order to provide a thorough understanding of the present invention. However, those skilled in the art will realize that the invention may be practiced without these specific details. In some instances, well-known structures and devices are omitted, or are shown in a block diagram form around the core functions of the structures and devices.

In the specification, some of which components "comprising or including" other components means that it is possible to contain other components, further, not the exclusion of any other component unless otherwise described. In addition, the "... unit,", "... based," "module" and other terms described in the specification refer to a unit that processes at least one function or operation, which can be implemented in hardware, software, or a combination of hardware and software. In addition, " a or an," "one," "the" and related similar terms in the context of describing the present invention (especially in the context of the claims hereinafter) can be used as a means to include both singular and plural forms unless otherwise indicated or clearly refuted by the context.

In addition to the above terms, certain terms used in the description below are provided to aid the understanding of the present invention, and the use of such specific terms may be replaced with other terms within the scope and sprint of the invention.

Hereinafter, as a representative example of a user terminal according to an embodiment of the present invention, a mobile communication terminal capable of providing a payment service using a beacon signal will be described, but the terminal is not limited to the mobile communication terminal and may be applied to various terminals such as all information communication devices, multimedia terminals, wired terminals, fixed terminals, IP (Internet Protocol) terminals, and the like. In addition, when the terminal is a mobile terminal having various mobile communication specifications such as a cell phone, a PMP (Portable Multimedia Player), an MID (Mobile Internet Device), a smartphone, a desktop, a tablet PC, a laptop, a Netbook, an information communication device, and the like, the terminal may be advantageously utilized.

In addition, a beacon applied to the mobile communication terminal according to the present invention is a data communication technique that utilizes a BLE (Bluetooth Low Energy) and has a Bluetooth function acting as a delicate GPS. NFC is available only within limited 10 cm, whereas the beacon may detect a distance from 5 cm to 49 cm, and therefore the application field of the beacon has been applied much more widely. The beacon does not make it necessary to get the smartphone close to a tag reader in the same manner as in NFC, enables data transmission by only passing through a place where the beacon is installed, and reads detailed position movement even within a building to transmit personalized data.

Hereinafter, a payment service system using a beacon according to an embodiment of the present invention will be described.

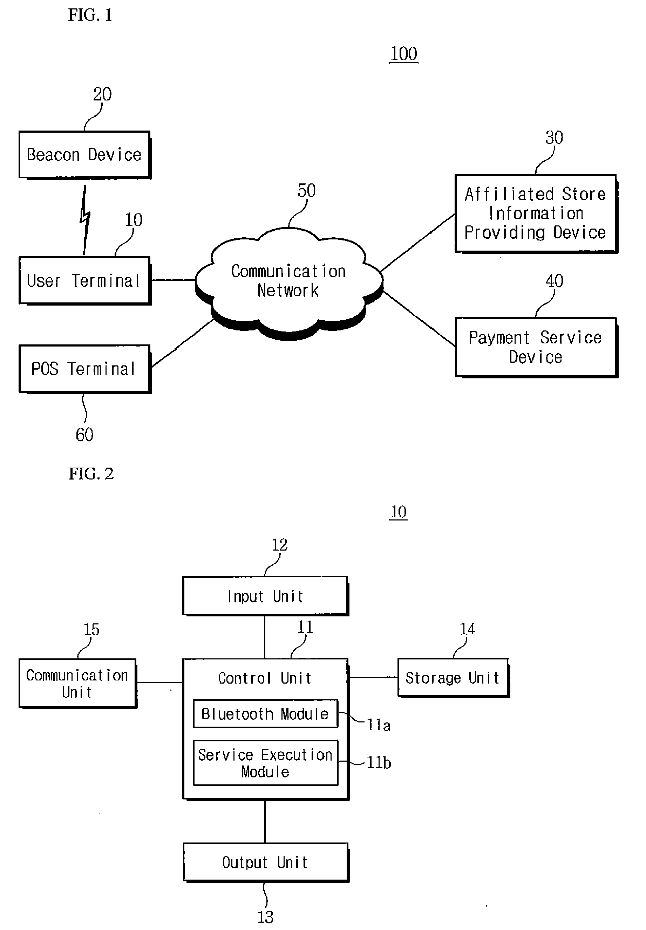

FIG. 1 is a view showing the configuration of a payment service system using a beacon according to an embodiment of the present invention.

Referring to FIG. 1, a payment service system 100 using a beacon according to an embodiment of the present invention includes a user terminal 10, a beacon device 20, an affiliated store information providing device 30, a payment service device 40, a POS (Point Of Sales) terminal 60, and a communication network 50.

A processor mounted in the user terminal 10, the beacon device 20, the affiliated store information providing device 30, the payment service device 40, and the POS terminal 60 according to the present invention may process program instructions for executing a method according to the present invention. In an implementation example, this processor may be a single-threaded processor, and in another implementation example, the present processor may be a multi-threaded processor. Furthermore, the present processor is capable of processing instructions stored in a memory or a storage device.

The communication network 50 performs a series of data transmission and reception operations for data transmission and information exchange among the user terminal 10, the beacon device 20, the affiliated store information providing device 30, the payment service device 40, and the POS terminal 60. In particular, as the communication network 50, various types of communication networks may be used, and for example, a wireless communication method such as WLAN (Wireless LAN), Wi-Fi, Wibro, Wimax, HSDPA (High Speed Downlink Packet Access), and the like, or a wired communication method such as Ethernet, xDSL (ADSL, VDSL), HFC (Hybrid Fiber Coax), FTTC (Fiber to The Curb), FTTH (Fiber To The Home), and the like may be used. Meanwhile, the communication network 50 is not limited to the above-mentioned communication methods, and may include all types of other communication methods which are widely known or will be developed in the future other than the above-mentioned communication methods.

The user terminal 10 communicates with the beacon device 20, the affiliated store information providing device 30, the payment service device 40, and the POS terminal 60 through the communication network 50, and thereby transmits and receives data to be applied to the payment using a beacon. In particular, the user terminal 10 according to the present invention receives a beacon signal from the beacon device 20, and extracts beacon identification information by analyzing the received beacon signal. Next, the user terminal 10 transmits the extracted beacon identification information to the affiliated store information providing device 30. In this instance, the user terminal 10 may store user information required when customer authentication is performed in order to receive a payment service according to the present invention, and the user information includes at least one of a user's name, terminal identification information or credit card information, and membership information. For example, the terminal identification information may include at least one of IMEI (International Mobile Station Equipment Identity), ESN (Electronic Serial Number), and MDN (Mobile Identification Number).

In particular, the user terminal 10 according to the present invention receives a beacon signal from one or more beacon devices 20, extracts beacon identification information by analyzing the received beacon signal, and transmits the extracted beacon identification information to the affiliated store information providing device 30. In addition, when receiving marketing information from the affiliated store information providing device 30, the user terminal 10 outputs the received marketing information, and when receiving a request for user authentication from the affiliated store information providing device 30 in association with payment for a specific product, the user terminal 10 receives an input of information for authentication from a user, and transmits the information for authentication to the affiliated store information providing device 30. Next, when receiving payment approval details from the payment service device 40, the user terminal 10 outputs the received payment approval details.

The beacon device 20 is used to radiate the beacon signal using wireless communication so as to allow the user terminal 10 to measure its own position. Specifically, the beacon device 20 radiates the beacon signal using short-range wireless communication. Desirably, the beacon device 20 may radiate the beacon signal using BLE (Bluetooth Low Energy), but is not limited thereto, and radiate the beacon signal using RFID (Radio Frequency Identification), Zigbee, short-range magnetic field communication (NFC, Near Field Communication), or the like.

The beacon signal radiated by the beacon device 20 includes beacon identification information for identifying the beacon device 20. The beacon identification information included in the beacon signal may include at least one of UUID (Universally Unique Identifier) of the beacon device 20, major indicating a group of the beacon devices, and a minor for identifying a specif beacon device within the group of the beacon devices.

As an example of the present invention, the beacon device 20 may be installed on the entrance and exit side of an affiliated store and within the affiliated store. In this case, the beacon device 20 may radiate the beacon signal to the entrance and exit areas of the affiliated store and to a predetermined area within the affiliated store, thereby using the beacon signal to measure the position of the user terminal 10 of a user who goes in the affiliated store and to measure the position of the user terminal 10 positioned within the affiliated store.

The affiliated store information providing device 30 transmits and receives marketing information using a beacon and data required for product payment, by communicating with the user terminal 10 and the payment service device 40 through the communication network 50.

In particular, the affiliated store information providing device 30 according to the present invention receives the beacon identification information for identifying the beacon device 20 from the user terminal 10. Next, the affiliated store information providing device 30 analyzes a user's position and moving route of the user terminal 10 based on the received beacon identification information. Next, the affiliated store information providing device 30 transmits marketing information to the user terminal 10 according to the analyzed result.

In addition, the affiliated store information providing device 30 requests information for user authentication from the user terminal 10 when user authentication is required in association with payment of a specific product, and performs, when receiving the information for user authentication from the user terminal 10, user authentication using the received information for user authentication. Next, when it is detected that the user's position is out of the affiliated store where the corresponding user goes in, the affiliated store information providing device 30 requests payment from the payment service device 40 based on the received information about the product.

The payment service device 40 transmits and receives data to be applied to payment by communicating with the user terminal 10 and the affiliated store information providing device 30 through the communication network 50.

In particular, the payment service device 40 according to the present invention receives affiliated store identification information and a payment request signal associated with a specific product from the affiliated store information providing device 30, makes product payment according to a payment means and a payment method which are registered in advance by the user of the corresponding user terminal 10, and transmits payment approval details to the user terminal 10.

The configuration of the user terminal in the above-described payment service system according to an embodiment of the present invention will be described in more detail.

FIG. 2 is a block diagram showing the configuration of a user terminal according to an embodiment of the present invention.

Referring to FIG. 2, the user terminal 10 according to the present invention includes a control unit 11, an input unit 12, an output unit 13, a storage unit 14, and a communication unit 15. Here, the control unit 11 includes a Bluetooth module 11a and a service execution module 11b.

The input unit 12 receives an input of a variety of information such as numeral or character information, and the like, and transmits signals input in association with setting of various functions and function control of the user terminal 10, to the control unit 11. In addition, the input unit 12 may include at least one of a keypad and a touchpad which generate input signals according to a user's touch or manipulation. In this instance, the input unit 12 may be configured in the form of a single touch panel (or a touch screen) together with the output unit 13, and simultaneously perform input and display functions. In addition, as the input unit 12, all types of input means which will be developed in the future, in addition to an input device such as a keyboard, a keypad, a mouse, a joystick, or the like may be used. In particular, the input unit 12 according to the present invention detects an input signal required when user authentication for receiving a payment service input from a user is performed, and transmits the detected input signal to the control unit 11.

The output unit 13 includes a display unit (not shown) that displays a series of operating states occurring while performing the function of the user terminal 10 and information about the operating results and an audio processing unit (not shown) that performs a function of transmitting audio signals input from a speaker (SPK) or a microphone (MIC) for reproducing and outputting audio signals, to the control unit 11.

First, the display unit may display menus of the user terminal 10, user data input by a user, and the like. Here, the output unit 13 may be provided in the form of an LCD (Liquid Crystal Display), a TFT-LCD (Thin Film Transistor LCD), an LED (Light Emitting Diode), an OLED (Organic LED), an AMOLED (Active Matrix OLED), a Retina display, a flexible display, a three-dimensional (3D) display, or the like. In this instance, when being configured in the form of a touch screen, the output unit 13 may perform some or all of the functions of the input unit 12. In particular, the output unit 13 according to the present invention outputs a payment screen for product payment, a screen for payment processing result, and the like.

In addition, the audio processing unit may convert an analog audio signal input through the microphone into a digital audio signal, and transmit the converted digital audio signal to the control unit 11. In addition, the audio processing unit may convert a digital audio signal output from the control unit 11 into an analog audio signal, and output the converted analog audio signal through the speaker. In particular, the audio processing unit according to the present invention outputs an effect sound or an execution sound which is generated in a process for the payment service.

The storage unit 14 is a device for storing data, includes a main storage device and an auxiliary storage device, and stores application programs required for function operations of the user terminal 10. Such a storage unit 14 may roughly include a program region and a data region. Here, when activating individual functions in response to a user's requests, the user terminal 10 may execute the corresponding application programs under the control of the control unit 11 and provide the individual functions. In particular, the storage unit 14 according to the present invention stores an OS (Operating System) for booting the user terminal 10, a program for checking the beacon device 20, a program for receiving a payment service according to the present invention, and the like. In addition, the storage unit 14 stores user information for authentication, beacon identification information, and the like. Here, the beacon identification information includes at least one of UUID, beacon group information, identification information within the beacon group, and member ID. Meanwhile, the user information includes at least one of a user's name, terminal identification information, credit card information, and membership information.

The communication unit 15 performs a function for transmitting and receiving position-based marketing information and data for product payment through the communication network 50. Here, the communication unit 15 includes an RF transmission means that increases, converts, and amplifies the frequency of a transmitted signal, an RF reception means that performs low noise amplification of a received signal, and decreases and converts the frequency of the received signal, and the like. Such a communication unit 15 may include at least one of a wireless communication module (not shown) and a wired communication module (not shown). Here, the wireless communication module is a component for transmitting and receiving data according to a wireless communication method, and when using the wireless communication, the user terminal 10 may transmit and receive data to and from the affiliated store information providing device 30 using any one of a wireless network communication module, a wireless LAN communication module, and a WPAN (Wireless Personal Area Network) communication module. In addition, the wired communication module is a component for transmitting and receiving data in a wired manner. The wired communication module may access the communication network 50 in a wired manner, and transmit and receive data to and from the affiliated store information providing device 30. In particular, the communication unit 15 according to the present invention transmits and receives data by communicating with the beacon device 20 and the affiliated store information providing device 30. In this instance, the communication unit 15 receives a beacon signal using BLE (Bluetooth Low Energy).

The control unit 11 may be a process device that is responsible for the overall control of the user terminal 10 and drives an OS and individual components.

In particular, the control unit 11 according to an embodiment of the present invention receives the beacon signal from the beacon device 20 by connecting to a beacon signal connection area within a specific store. Next, the control unit 11 extracts the beacon identification information from the beacon signal received from the beacon device 20. Here, the beacon identification information includes at least one of UUID of the beacon device 20, a major indicating a group of the beacon device 20, and a minor for identifying the beacon device 20 within the group of the beacon device 20.

The control unit 11 transmits the extracted beacon identification information to the affiliated store information providing device 30. Next, when receiving the marketing information from the affiliated store information providing device 30, the control unit 11 transmits the received marketing information through the output unit 13. In addition, when there is a request for user authentication from the affiliated store information providing device 30 in association with payment of a specific product, the control unit 11 receives an input of information for authentication from a user, and transmits the information for authentication to the affiliated store information providing device 30. Next, when receiving payment approval details, the control unit 11 outputs the received payment approval details through the output unit 13.

Such a platform structure of the user terminal may include hardware, an OS, and applications.

The hardware refers to a physical environment that includes a CPU (Central Processing Unit), a short-range wireless communication chip for receiving a beacon signal, a communication chip for being connected to the communication network 50, and the like, which constitute the user terminal 10.

The OS controls the hardware and is responsible for the overall operation of the user terminal 10, and may be generally installed by a manufacturer of the user terminal 10 or a mobile carrier. The OS 110 provides an API (Application Programming Interface) capable of controlling the hardware in order to support the applications.

The applications may be constituted of one or more programs which are operated on the OS, and include a payment service program according to the present invention. Specifically, the applications may control the hardware using the API provided by the OS. The payment service program included in the applications may receive the beacon signal from the beacon device 20 using the API provided by the OS, and perform the payment service in conjunction with the affiliated store information providing device 30.

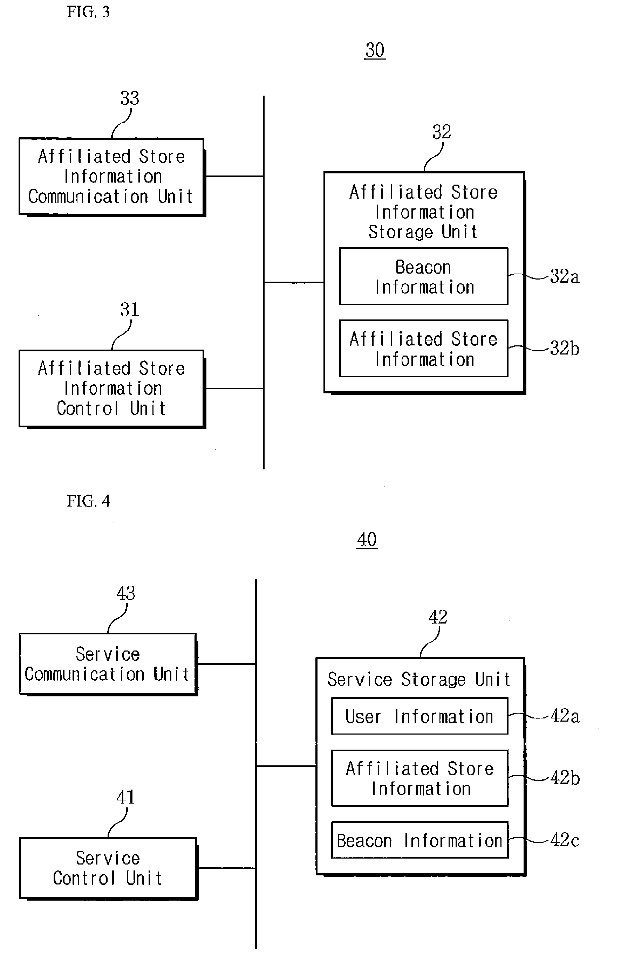

FIG. 3 is a block diagram showing the configuration of an affiliated store information providing device according to an embodiment of the present invention.

Referring to FIG. 3, the affiliated store information providing device 30 according to the present invention may include an affiliated store information control unit 31, an affiliated store information storage unit 32, and an affiliated store information communication unit 33.

The affiliated store information communication unit 33 transmits and receives data by communicating with the user terminal 10 and the payment service device 40 through the communication network 50. That is, the affiliated store information communication unit 33 receives beacon identification information from the user terminal 10 through the communication network 50, and transmits marketing information to the user terminal 10.

The affiliated store information storage unit 32 is used to store data required for the operation of the affiliated store information providing device 30. Here, the affiliated store information storage unit 32 includes and stores beacon information 32a and affiliated store information 32b. Such beacon information is used when it is determined whether the user terminal 10 is positioned in the entrance and exit areas of a specific affiliated store, used to determine in which position the user terminal 10 is present within the affiliated store when a user of the user terminal 10 goes in the specific affiliated store, and used to analyze a moving route of the user terminal 10 using position information.

Specifically, the beacon information 32a includes and stores beacon identification information. Here, the beacon identification information refers to a series of information used to identify the beacon device 20, and is not necessarily limited to a character string. Here, the beacon identification information may include at least one of UUID of the beacon device 20, a major indicating a group of beacon devices, and a minor for identifying a specific beacon device within the group of the beacon devices. Such beacon identification information includes position information of the beacon device installed within the affiliated store.

In addition, the affiliated store information 32b includes and stores affiliated store information. Here, the affiliated store information includes affiliated store identification information that is a series of information used to identify the affiliated store, marketing information about the corresponding affiliated store, and information about a product merchandized by the corresponding affiliated store.

The affiliated store information control unit 31 is a component for performing the overall control of the affiliated store information providing device 30, and is used to control a signal flow for performing the function of the affiliated store information communication unit 33 and the affiliated store information storage unit 32.

Specifically, the affiliated store information control unit 31 receives the beacon identification information from the user terminal 10 through the affiliated store information communication unit 33. In addition, the affiliated store information control unit 31 determines whether the user terminal 10 is positioned in the entrance and exit areas of a specific affiliated store and determines in which position the user terminal 10 is present within the affiliated store when a user of the user terminal 10 goes in the specific affiliated store, using the received beacon identification information, and analyzes a moving route of the user terminal 10 using position information.

In addition, the affiliated store information control unit 31 transmits the marketing information to the user terminal 10 according to the analyzed result. Such an affiliated store information control unit 31 requests information for user authentication from the user terminal 10 when user authentication is required in association with payment of a specific product, and performs, when receiving the information for user authentication from the user terminal 10, user authentication using the received information for user authentication. Next, when it is detected that the user's position is out of the affiliated store where the corresponding user goes in, the affiliated store information control unit 31 requests payment from the payment service device 40 based on the received information about the product.

FIG. 4 is a block diagram showing the configuration of a payment service device according to an embodiment of the present invention.

Referring to FIG. 4, the payment service device 40 according to the present invention includes a service control unit 41, a service storage unit 42, and a service communication unit 43. Here, the service storage unit 42 includes user information 42a, affiliated store information 42b, and beacon information 42c.

The service communication unit 43 transmits and receives data required for payment by communicating with the user terminal 10 and the affiliated store information providing device 30 through the communication network 50.

The service storage unit 42 stores all programs and data according to function execution of the payment service device 40. In addition, the service storage unit 42 registers customer information in advance from a customer desiring to receive a payment service, and stores the registered customer information. In this instance, the customer information includes information about a payment means and a payment method.

The service control unit 41 may be a process device that drives an OS and individual components. In particular, the service control unit 41 according to the present invention receives affiliated store identification information and a payment request signal associated with a specific product from the affiliated store information providing device 30. In this instance, the service control unit 41 may check discount information such as a card company discount or an affiliated company coupon out of the user information of the user terminal 10, and perform the requested payment for the corresponding product by applying the discount information. Next, the service control unit 41 transmits payment approval details to the user terminal 10 in response to the request.

In addition, the payment service device 40 configured as described above may be implemented as one or more servers which are operated in a server-based computing method or a cloud method. In particular, data required for performing payment through a beacon may be provided through a cloud computing function that can be permanently stored in a cloud computing device on the Internet. Here, cloud computing refers to a technology that services IT (Information Technology) resources virtualized by utilizing the Internet technology in digital terminals such as a desktop, a tablet computer, a laptop, a Netbook, a smartphone, and the like, for example, hardware (server, storage, network, and the like), software (database, security, web server, and the like), services, data, and the like in an On demand method.

Meanwhile, memories mounted in the user terminal 10, the affiliated store information providing device 30, and the payment service device 40 may store information within the corresponding device. In a case of one implementation example, the memory is a computer-readable medium. In one implementation example, the memory may be a volatile memory unit, and in another implementation example, the memory may be a non-volatile memory unit. In the case of one implementation example, a storage device is a computer-readable medium. In various different implementation examples, the storage device may include, for example, a hard disk device, an optical disk device, and any other large capacity storage devices.

Although an exemplary device configuration is described in the present specification and drawings, implementations of the subject matter and the functional operations described in this specification can be implemented in other types of digital electronic circuitry, or in computer software, firmware, or hardware, including the structures disclosed in this specification and their structural equivalents, or in combinations of one or more of them. Implementations of the subject matter described in this specification can be implemented as one or more computer program products, i.e., one or more modules of computer program instructions encoded on a tangible program storage medium for execution by, or to control the operation of, a processing system. The computer-readable medium can be a machine-readable storage device, a machine-readable storage substrate, a memory device, a composition of matter affecting a machine-readable propagated signal, or a combination of one or more of them.

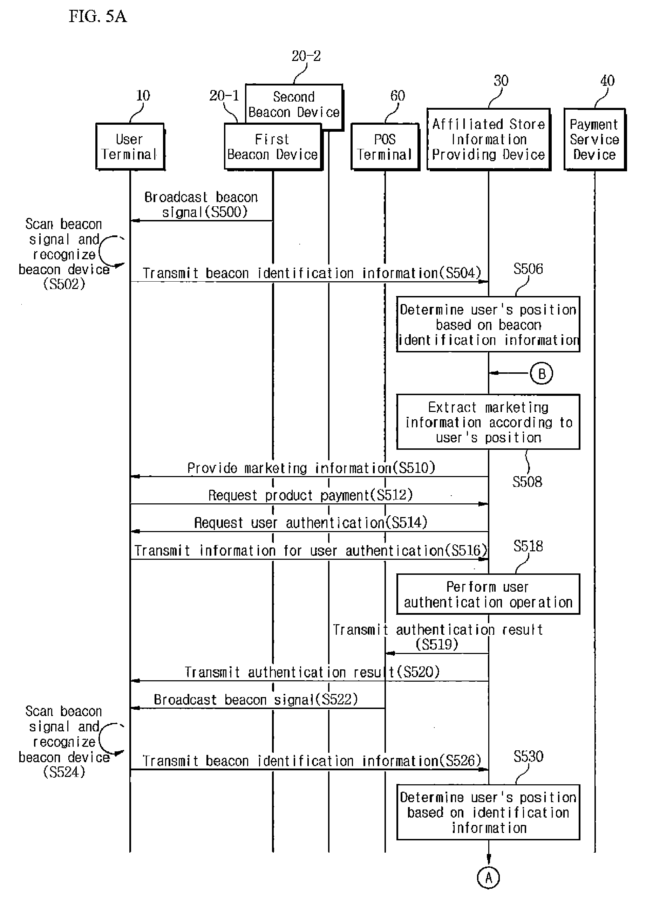

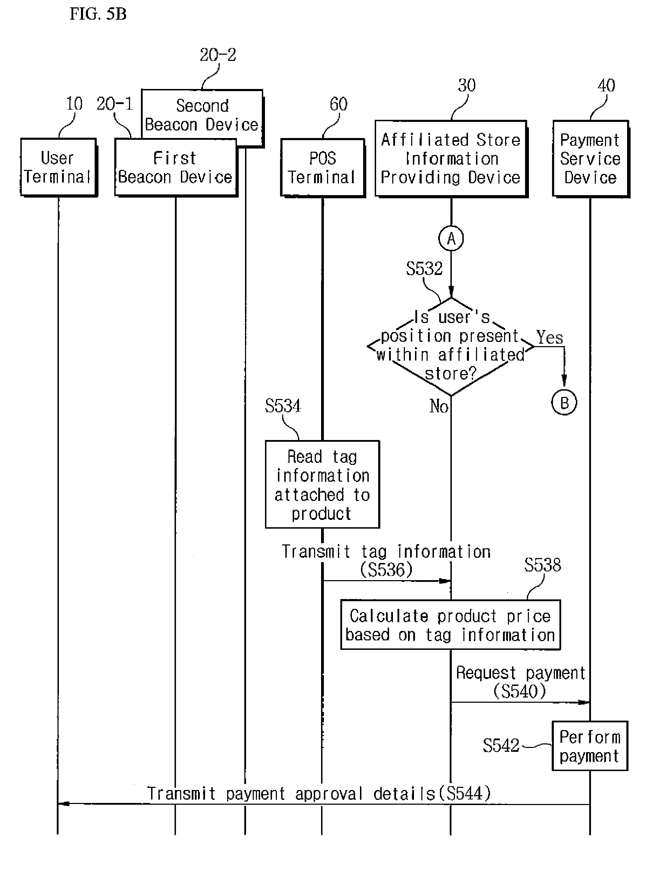

FIGS. 5A and 5B are data flowcharts showing a payment service method according to an embodiment of the present invention. In FIGS. 5A and 5B, a first beacon device 20-1 and a second beacon device 20-2 are devices installed within the same store, and it is assumed that the first beacon device 20-1 is installed in an entrance area of the store and the second beacon device 20-2 is installed in an exit area of the store.

When advancing to an area capable of receiving a beacon signal radiated from the first beacon device 20-1, the user terminal 10 receives the beacon signal radiated from the first beacon device 20-1. In operations S500 to S502, the user terminal 10 extracts beacon identification information for identifying the first beacon device 20-1 by analyzing the received beacon signal.

Next, in operation S504, the user terminal 10 transmits the extracted beacon identification information to the affiliated store information providing device 30.

The affiliated store information providing device 30 extracts affiliated store identification information about an affiliated store corresponding to the beacon identification information. In addition, the affiliated store information providing device 30 determines a user's position based on the beacon identification information. In operations S506 to S510, marketing information about the affiliated store mapped on the affiliated store identification information extracted in this manner is extracted, and the extracted marketing information is provided to the user terminal 10.

Thus, the user may go into the corresponding affiliated store while carrying his or her own terminal, and check marketing information about the corresponding affiliated store or marketing information about displayed products according to a specific position or a moving route of the user. In this instance, the marketing information may include information such as sale information, detailed product information, a discount coupon, and the like.

In operations S510 to S512, when receiving an input for a product payment request for purchasing a specif product from the user, the user terminal 10 transmits a product payment request signal to the affiliated store information providing device 30.

In operation S514, the affiliated store information providing device 30 that has received the product payment request signal requests user authentication from the user terminal 10.

Next, in operations S516 to S518, the user terminal 10 receives an input of information for user authentication from the user and transmits the information for user authentication to the affiliated store information providing device 30, and the affiliated store information providing device 30 performs a user authentication operation based on the received information.

Next, in operations S519 and S520, the affiliated store information providing device 30 transmits the corresponding user authentication result to the POS terminal 60 and the user terminal 10.

Such a user authentication operation is a procedure for determining whether a customer who possesses the user terminal 10 matches a subscriber.

In addition, when advancing to an area capable of receiving a beacon signal radiated from the second beacon device 20-2, the user terminal 10 receives the beacon signal radiated from the second beacon device 20-2. In operations S522 to S530, the user terminal 10 extracts beacon identification information for identifying the second beacon device 20-2 by analyzing the received beacon signal.

Next, referring to FIG. 5B, in operation S532, the affiliated store information providing device 30 determines whether a user's position is present within the corresponding affiliated store using the beacon identification information.

When the user's position is present within the corresponding affiliated store, the payment service method proceeds to B, and the affiliated store information providing device 30 analyzes the user's position and moving route based on the received beacon identification information, and transmits marketing information according to the analyzed result to the user terminal 10.

However, in operations S536 to S540, when the user's position is out of the corresponding affiliated store, the payment service method calculates a price of the corresponding product based on tag information of the corresponding product received from the POS terminal 60, and requests payment for the corresponding product by transmitting information for product payment including the calculated price of the corresponding product to the payment service device 40.

Before operation S536, when the user goes out of the affiliated store via a sensor capable of reading tag or RFID information attached to the corresponding product on the exit side while carrying the corresponding product, the payment service method transmits information read from the sensor to the affiliated store information providing device 30 through the POS terminal 60. As another example, the payment service method may calculate the price of the corresponding product based on the tag or RFID information read through the sensor by the POS terminal 60, and request payment for the corresponding product by transmitting the calculated price of the corresponding product to the affiliated store information providing device 30.

Next, the payment service device 40 receives the affiliated store identification information and a payment request signal associated with a specific product from the affiliated store information providing device 30. In this instance, the payment service device 40 may check discount information such as a card company discount or affiliated company coupon out of the user information of the user terminal 10, and perform the requested payment for the corresponding product by applying the discount information. Next, in operations S542 to S544, the payment service device 40 transmits payment approval details to the user terminal 10 in response to the request.

That is, when the user directly goes out of the store without having to go through a staff of the store while carrying the corresponding product, the payment service method may determine an accurate position of the user who goes out of the store using identification information of the beacon device, automatically calculate the price of the corresponding product using the sensor capable of reading tag or RFID information attached to the corresponding product, and automatically charge the calculated price to a customer authenticated through the POS terminal 60 within the affiliated store.

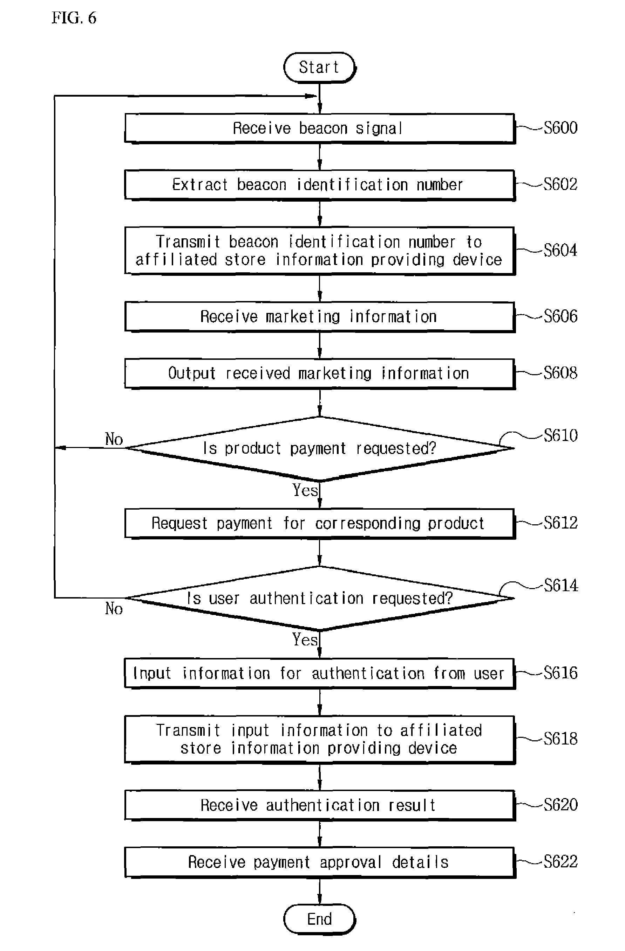

Next, a process for providing a payment service in the user terminal 10 will be described with reference to FIG. 6.

Referring to FIG. 6, in operation S600, when advancing to an area capable of receiving a beacon signal radiated from the beacon device 20, the user terminal 10 receives the beacon signal radiated from the beacon device 20.

In operations S602 to S604, the user terminal 10 extracts beacon identification information for identifying the beacon device 20 by analyzing the received beacon signal, and then transmits the extracted beacon identification information to the affiliated store information providing device 30.

Next, in operations S606 to S608, when receiving marketing information from the affiliated store information providing device 30, the user terminal 10 outputs the received marketing information. In this instance, the marketing information refers to marketing information about an affiliated store when a user is positioned in the vicinity of the affiliated store, or marketing information about products displayed in the vicinity of a current position of the user when the user is positioned or moving within the affiliated store.

Therefore, the user may go into the affiliated store while carrying his or her own terminal, and check marketing information about the affiliated store or marketing information about the displayed products according to a specific position or a moving route of the user.

In operations S610 to S618, when receiving a product payment request, the user terminal 10 requests payment for the corresponding product from the affiliated store information providing device 30, and when receiving a user authentication request from the affiliated store information providing device 30, the user terminal 10 requests an information input for authentication from a user and transmits the information input from the user to the affiliated store information providing device 30.

Next, in operation S620, the user terminal 10 receives the authentication result.

Meanwhile, when a user goes out of the affiliated store via the sensor capable of reading tag or RFID information attached to the corresponding product on the exit side while carrying the corresponding product, that is, when the user is out of the affiliated store, payment for the corresponding product is automatically made, and payment approval details are transmitted to the user terminal 10 of the user so that the user may check the transmitted payment approval details.

That is, when a customer is registered as a member in advance so as to receive the payment service according to the present invention, and then uses the corresponding affiliated store, the customer may advance to the affiliated store, be subjected to a customer authentication procedure once, and then go out of the corresponding affiliated store only via the sensor capable of reading product information without having to go through a staff of the corresponding affiliated store while carrying a product desired to be purchased, and thereby payment for the product may be automatically made.

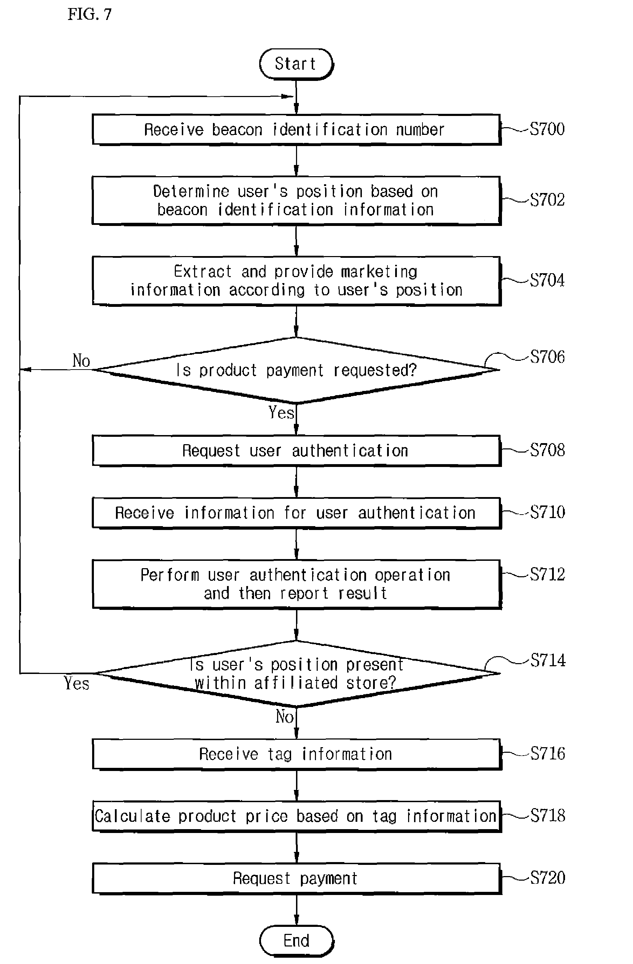

Next, a process for providing a payment service in an affiliated store information providing device will be described with reference to FIG. 7.

Referring to FIG. 7, in operations S700 to S702, when receiving beacon identification information from the user terminal 10, the affiliated store information providing device 30 determines a user's potion based on the received beacon identification information.

Next, in operation S704, the affiliated store information providing device 30 extracts marketing information according to the determined user's position, and provides the extracted marketing information to the user terminal 10.

Thus, a user may advance to the corresponding affiliated store while carrying his or her own terminal, and check marketing information about the corresponding affiliated store or marketing information about displayed products according to a specific position or moving route of the user. In this instance, the marketing information may include information such as sale information, detailed product information, or a discount coupon.

Next, in operations S706 to S708, when receiving a product payment request signal from the user terminal 10, the affiliated store information providing device 30 requests user authentication from the user terminal 10.

In operations S710 to S712, when receiving information for user authentication from the user terminal 10 according to the request for user authentication, the affiliated store information providing device 30 performs a user authentication operation based on the received information, and then reports a payment result. In this instance, the payment result may be reported to the POS terminal 60 and the user terminal 10. The reason why the payment result is reported to the POS terminal 60 is to notify of the fact that the corresponding user is a user who is currently authenticated and to allow the corresponding user to directly go out of the affiliated store, when the corresponding user desires to go out of the affiliated store while carrying the corresponding product.

Next, in operation S714, the affiliated store information providing device 30 determines whether the user's position is present within the affiliated store.

In operations S700 to S704, when the user's position is present within the affiliated store, the affiliated store information providing device 30 analyzes the user's position and moving route based on the received beacon identification information, and transmits marketing information according to the analyzed result to the user terminal 10.

However, in operations S716 to S720, when the user's position is out of the affiliated store, the affiliated store information providing device 30 calculates a price of the corresponding product based on tag information of the corresponding product received from the POS terminal 60, and requests payment for the corresponding product by transmitting information for product payment including the calculated price of the corresponding product to the payment service device 40.

In operations S716 to S720, a case in which the affiliated store information providing device 30 receives tag or RFID information about the corresponding product from the POS terminal 60 and directly calculates the price of the corresponding product has been described, but the POS terminal 60 may calculate the price of the corresponding product based on the tag or RFID information read through the sensor and request payment for the corresponding product by transmitting the calculated price information of the corresponding product to the affiliated store information providing device 30.

Implementations of the various techniques described herein may be implemented in digital electronic circuitry, or in computer hardware, firmware, software, or in a combination of them. Implementations may be implemented as a computer program product, i.e., a computer program tangibly embodied in an information carrier, e.g., in a machine-readable storage device (computer-readable medium) or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. The computer program can be deployed to be processed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., magnetic media such as a hard disk, floppy disk, and magnetic tape; optical media such as a CD-ROM (Compact Disc Read-Only Memory) and DVD (Digital Video Disc); magneto-optical media such as a floptical disk; a ROM (Read-Only Memory), RAM (Random Access Memory), flash memory device, EPROM (Erasable Programmable ROM), EEPROM (Electrically Erasable Programmable ROM), and the like. The processor and the memory can be supplemented by, or incorporated in special purpose logic circuitry.

While this specification contains many specific implementation details, these should not be construed as limitations on the scope of any invention or of what can be claimed, but rather as descriptions of features that can be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features can be described above as acting in certain combinations and even initially claimed as such, one or more features from a claimed combination can in some cases be excluded from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the embodiments described above should not be understood as requiring such separation in all embodiments, and it should be understood that the described program components and systems can generally be integrated together in a single software product or packaged into multiple software products.

Meanwhile, the embodiments of the invention disclosed in the specification and drawings are presented merely as a specific example for clarity and are not intended to limit the scope of the invention. It will be apparent to those of ordinary skill in the art that other modifications based on the technical spirit of the present invention can be carried out in addition to the embodiments disclosed herein.

The present invention relates to a payment service system using a beacon and a payment service device and method in the system, and may analyze a user's position and moving route using a beacon signal positioned in a store to thereby provide target marketing information based on the analyzed result, and enable one-click payment with respect to a product desired to be purchased, so that payment may be conveniently made.

In addition, there is an advantage in performing target marketing with respect to a user, and the user may easily check information such as detailed information and discount information about the corresponding product and this may be a lot of help when the corresponding product is purchased.

In addition, when a user is positioned within an affiliated store in a case in which the user desires to make payment for a specific product in the affiliated store, whether the user who possesses a terminal matches a subscriber of the terminal may be determined in advance. Thereafter, when the user goes out of the affiliated store via the entrance and exit of the affiliated store in which a sensor is installed while carrying the product, the fact that the user goes out from the affiliated store may be confirmed using a beacon signal, the sensor may calculate the price of the product when the user passes through the entrance and exit, and the calculated price may be automatically charged to the user who has been authenticated through a POS terminal of the affiliated store.

In addition, the degree to which the present invention can obviously be carried out in reality, as well as a commercial or business potential, is likely to be sufficient for industrial applicability.

In this specification, exemplary embodiments of the present invention have been classified into the first, second and third exemplary embodiments and described for conciseness. However, respective steps or functions of an exemplary embodiment may be combined with those of another exemplary embodiment to implement still another exemplary embodiment of the present invention.

## Claims

1. A user terminal comprising:
a communication unit that transmits and receives data by communicating with one or more beacon devices, an affiliated store information providing device, and a payment service device;
an output unit that outputs received information; and
a control unit that receives a beacon signal from the beacon device, extracts beacon identification information by analyzing the beacon signal, transmits the extracted beacon identification information to the affiliated store information providing device, outputs, when receiving marketing information from the affiliated store information providing device, the received marketing information through the output unit, receives an input of information for user authentication from a user when there is a request for user authentication from the affiliated store information providing device in association with payment for a specific product, transmits the information for user authentication to the affiliated store information providing device, and then outputs, when receiving payment approval details, the received payment approval details through the output unit.

2. The user terminal according to claim 1, wherein the communication unit receives the beacon signal using a BLE (Bluetooth Low Energy).

3. The user terminal according to claim 1, further comprising:
a storage unit that stores user information for identifying a user of the user terminal and beacon identification information for identifying the beacon device.

4. An affiliated store information providing device comprising:
an affiliated store information communication unit that transmits and receives data by communicating with one or more user terminals and a payment service device;
an affiliated store information storage unit that stores affiliated store identification information for identifying a specific affiliated store; and
an affiliated store information control unit that receives beacon identification information from the user terminal through the affiliated store information communication unit, analyzes a user's position and moving route of the user terminal based on the beacon identification information, transmits marketing information to the user terminal through the affiliated store information communication unit according to the analyzed result, requests information for user authentication from the user terminal when the user authentication is required in association with payment for a specific product, performs user authentication, when receiving the information for user authentication from the user terminal, using the received information for user authentication, and then requests payment for the specific product from the payment service device based on received information about the specific product when it is detected that the user's position is out of an affiliated store where the user of the corresponding user terminal goes in.

5. A payment service device comprising:
a service communication unit that transmits and receives data by communicating with one or more user terminals and an affiliated store information providing device; and
a service control unit that receives affiliated store identification information and a payment request signal associated with a specific product from the affiliated store information providing device, performs product payment according to a payment means and a payment method registered in advance by a user of the corresponding user terminal in response to the payment request, and controls payment approval details to be transmitted to the user terminal.

6. A payment service system comprising:
a user terminal that receives a beacon signal from one or more beacon devices, extracts beacon identification information by analyzing the beacon signal, transmits the extracted beacon identification information to an affiliated store information providing device, outputs, when receiving marketing information from the affiliated store information providing device, the received marketing information, receives an input of information for user authentication from a user of the corresponding user terminal when there is a request for user authentication from the affiliated store information providing device in association with payment for a specific product, transmits the information for user authentication to the affiliated store information providing device, and then outputs, when receiving payment approval details, the received payment approval details;
the affiliated store information providing device that receives beacon identification information from the user terminal, analyzes a user's position and moving route of the user terminal based on the beacon identification information, transmits marketing information to the user terminal according to the analyzed result, requests information for user authentication from the user terminal when the user authentication is required in association with payment for the specific product, performs user authentication, when receiving the information for user authentication from the user terminal, using the received information for user authentication, and then requests payment for the specific product from the payment service device based on received information about the specific product when it is detected that the user's position is out of an affiliated store where the user goes in; and
the payment service device that receives affiliated store identification information and a payment request signal associated with the specific product from the affiliated store information providing device, performs product payment according to a payment means and a payment method registered in advance by the user of the corresponding user terminal in response to the payment request, and transmits payment approval details to the user terminal.

7. A payment service method using a beacon comprising:
receiving, by a user terminal, a beacon signal from one or more beacon devices;
extracting, by the user terminal, beacon identification information from the beacon signal;
transmitting, by the user terminal, the extracted beacon identification information to an affiliated store information providing device;
outputting, when receiving marketing information from the affiliated store information providing device, the received marketing information;
receiving an input of information for user authentication from a user when there is a request for user authentication from the affiliated store information providing device in association with payment for a specific product, and transmitting the information for user authentication to the affiliated store information providing device; and
outputting, when receiving payment approval details from a payment service device, the received payment approval details.

8. The payment service method according to claim 7, before the receiving of the beacon signal, further comprising:
connecting, by the user terminal, to a reception area of the beacon signal within a specific affiliated store.

9. The payment service method according to claim 7, wherein the beacon identification information includes at least one of UUID (Universally Unique Identification), a major indicating a group of the beacon device, and a minor for identifying the beacon device within the group of the beacon device.

10. A payment service method comprising:
receiving, by an affiliated store information providing device, beacon identification information from a user terminal;
analyzing a user's position and moving route of the user terminal based on the beacon identification information;
transmitting marketing information to the user terminal according to the analyzed result;
requesting information for user authentication from the user terminal when the user authentication is required in association with payment for a specific product;
performing user authentication, when receiving the information for user authentication from the user terminal, using the received information for user authentication; and
requesting payment from a payment service device based on received information about the specific product when it is detected that the user's position is out of an affiliated store where the user of the user terminal goes in.

11. A payment service method comprising:
receiving, by a payment service device, affiliated store identification information and a payment request signal associated with a specific product from a affiliated store information providing device;
performing product payment according to a payment means and a payment method registered in advance by a user of a corresponding user terminal in response to the payment request; and
transmitting payment approval details to the user terminal.

12. A computer-readable recording medium in which a program for executing the payment service method using the beacon described in Claim 7 is recorded.

13. A computer-readable recording medium in which a program for executing the payment service method using the beacon described in Claim 10 is recorded.

14. A computer-readable recording medium in which a program for executing the payment service method using the beacon described in Claim 11 is recorded.
